# FASCICULE DE BREVET EUROPEEN

(11) **EP 4 516 677 B1**
(45) Date de publication et mention de la délivrance du brevet: **24.06.2026**
(21) Numéro de dépôt: 24196886.6
(22) Date de dépôt: 28.08.2024
(51) Int. Cl.: B64D 27/12, B64D 27/18, B64D 27/40

(54) **ENSEMBLE POUR UN AÉRONEF COMPORTANT UNE AILE ET UN MÂT RÉACTEUR POUR COUPLER UN SYSTÈME DE PROPULSION À LADITE AILE**
ANORDNUNG FÜR EIN LUFTFAHRZEUG MIT EINEM FLÜGEL UND EINEM STRAHLTRIEBWERK-PYLON ZUR KOPPLUNG EINES ANTRIEBSSYSTEMS AN DEN FLÜGEL
ASSEMBLY FOR AN AIRCRAFT COMPRISING A WING AND A JET ENGINE PYLON FOR COUPLING A PROPULSION SYSTEM TO SAID WING

(30) Priorité: 31.08.2023 FR 2309132
(43) Date de publication de la demande: 05.03.2025
(73) Titulaire: AIRBUS OPERATIONS, 31060 Toulouse Cedex 9 (FR)
(72) Inventeur: GUENEAU, Germain, 31060 TOULOUSE (FR); COMBES, Pierre-Antoine, 31060 TOULOUSE (FR); DE NICOLA, Marc, 31060 TOULOUSE (FR)
(74) Mandataire: Cabinet Le Guen Maillet

(56) Documents cités:
- FR-A1- 3 044 297
- US-A- 4 560 122
- US-A1- 2022 194 610

## Description

### DOMAINE TECHNIQUE

La présente invention concerne un ensemble pour un aéronef qui comporte une aile et un mât réacteur pour coupler un système de propulsion à l'aile, ainsi qu'un aéronef comportant un système de propulsion et un tel ensemble pour coupler le système de propulsion à l'aile.

### ÉTAT DE LA TECHNIQUE ANTÉRIEURE

Habituellement, pour un aéronef, un ensemble de propulsion comporte par exemple un turboréacteur qui est fixé à une aile de l'aéronef à l'aide d'un mât réacteur. Le mât réacteur est généralement constitué d'une structure primaire formée d'un caisson constitué d'un longeron supérieur, d'un longeron inférieur et de deux panneaux latéraux reliant les deux longerons et de nervures internes réparties le long du caisson.

Le turboréacteur est fixé sous le mât réacteur au moyen d'attaches moteur qui comprennent classiquement, à l'avant, une attache moteur avant, à l'arrière, une attache moteur arrière, et entre les attaches moteur avant et arrière, un assemblage de reprise d'effort de poussée comprenant des bielles de reprise fixées entre le turboréacteur et la structure primaire du mât, pour absorber les forces de poussée générées par le turboréacteur. Le mât réacteur est en outre fixé à la structure de l'aile à l'aide de ferrures à travers lesquelles les efforts provenant du turboréacteur transitent vers la structure de l'aile.

Les documents US4560122, US2022/194610 et FR3044297 décrivent de telles solutions de fixation d'un mât réacteur à une aile. En particulier, le document US4560122 comporte un ensemble avec une aile ayant un longeron avant et un panneau d'intrados fixé à une partie basse du longeron avant, où le longeron avant porte une première ferrure et où le panneau d'intrados porte une ferrure tribord et une ferrure bâbord. L'ensemble comporte également un mât réacteur ayant une structure primaire, une manille tribord fixée à la ferrure tribord et une manille bâbord fixée à la ferrure bâbord. La structure primaire comporte une première chape de fixation fixée à la première ferrure par une liaison pivot ainsi qu'une chape de fixation tribord fixée par une liaison pivot à la manille tribord et une chape de fixation bâbord fixée par une liaison pivot à la manille bâbord. Bien que les installations actuelles donnent satisfaction, il est nécessaire de fournir une implantation où le transfert d'efforts est amélioré et où la sécurité est améliorée, par exemple en cas de rupture d'un élément constitutif de la fixation.

### EXPOSÉ DE L'INVENTION

Un objet de la présente invention est de proposer un ensemble pour un aéronef comportant une aile et un mât réacteur pour coupler un système de propulsion à l'aile et qui comporte des moyens de fixation à l'aile qui assurent un transfert amélioré des efforts vers la structure de l'aile tout en permettant de garantir la transmission de ces efforts en cas de rupture d'un élément de fixation.

À cet effet, est proposé un ensemble pour le montage sur un aéronef d'un système de propulsion présentant un plan médian vertical, ledit ensemble comportant :
- une aile avec un longeron avant et un panneau d'intrados fixé à une partie basse dudit longeron avant, où le longeron avant porte une première ferrure au niveau du plan médian vertical et où ledit panneau d'intrados porte une ferrure tribord et une ferrure bâbord,
- un mât réacteur comportant une structure primaire,
- une première manille tribord fixée à ladite ferrure tribord par une première et une deuxième liaisons pivot autour d'un axe s'étendant globalement perpendiculairement au plan médian,
- une première manille bâbord fixée à ladite ferrure bâbord par une quatrième et une cinquième liaisons pivot autour d'un axe s'étendant globalement perpendiculairement au plan médian.

Une partie arrière de ladite structure primaire comporte une première chape de fixation s'étendant à l'arrière et au niveau du plan médian vertical, ladite première chape de fixation étant fixée à ladite première ferrure par une septième liaison présentant au moins un degré de liberté en rotation autour d'un axe s'étendant globalement parallèlement au plan médian.

La partie arrière comporte aussi une chape de fixation tribord et une chape de fixation bâbord s'étendant de part et d'autre et à l'arrière de ladite partie arrière.

Ladite chape de fixation tribord est fixée par une troisième liaison pivot à ladite première manille tribord autour d'un axe s'étendant globalement perpendiculairement au plan médian et ladite chape de fixation bâbord est fixée par une sixième liaison pivot à ladite première manille bâbord autour d'un axe s'étendant globalement perpendiculairement au plan médian. Avantageusement, l'ensemble comporte en outre :
- une deuxième manille tribord s'étendant globalement parallèlement à ladite première manille tribord, ladite deuxième manille tribord étant fixée à ladite ferrure tribord par lesdites première et deuxième liaisons et à ladite chape tribord par ladite troisième liaison,
- une deuxième manille bâbord s'étendant globalement parallèlement à ladite première manille bâbord, ladite deuxième manille bâbord étant fixée à ladite ferrure bâbord par lesdites quatrième et cinquième liaisons et à ladite chape de fixation bâbord par ladite sixième liaison. Lesdites première et deuxième manilles tribord enserrent ladite ferrure tribord et ladite chape de fixation tribord tandis que lesdites première et deuxième manilles bâbord enserrent ladite ferrure bâbord et ladite chape de fixation bâbord.

Selon un aspect particulier de l'invention, chaque manille comporte deux plaques accolées et fixées l'une contre l'autre.

Selon un autre aspect particulier de l'invention, lesdites ferrures tribord et bâbord présentent une section globalement en T avec une partie horizontale fixée à la partie basse dudit longeron avant et une partie verticale dans laquelle sont réalisées les liaisons pivot associées.

Selon encore un autre aspect particulier de l'invention, chaque ferrure tribord et bâbord est constituée de deux éléments présentant une section globalement en Γ et étant solidaires l'un de l'autre.

Selon un aspect particulier de l'invention, ladite première chape de fixation comporte deux sous-chapes accolées et fixées l'une contre l'autre.

Selon un aspect particulier de l'invention, la septième liaison entre ladite première chape de fixation et ladite première ferrure comporte un axe principal et un axe secondaire s'étendant coaxialement et à l'intérieur dudit axe principal.

Selon un aspect particulier de l'invention, ladite partie arrière comporte une première excroissance bâbord et une première excroissance tribord s'étendant verticalement dans un plan globalement perpendiculaire au plan médian vertical, lesdites premières excroissances étant disposées de part et d'autre de ladite structure primaire. Pour la première excroissance bâbord, l'ensemble comporte une première biellette dont une première extrémité est fixée à ladite première excroissance par une huitième liaison pivot. Pour la première excroissance tribord, l'ensemble comporte une deuxième biellette dont une première extrémité est fixée à ladite première excroissance tribord par une neuvième liaison pivot.

Lesdites ferrures bâbord et tribord comportent respectivement une deuxième excroissance bâbord et une deuxième excroissance tribord s'étendant verticalement dans un plan globalement perpendiculaire au plan médian vertical. Lesdites deuxièmes excroissances s'étendent en partie basse des ferrures, la deuxième excroissance tribord étant fixée à une deuxième extrémité de ladite première biellette par une dixième liaison pivot et ladite deuxième excroissance bâbord étant fixée à une deuxième extrémité de ladite deuxième biellette par une onzième liaison pivot.

Selon un aspect particulier de l'invention, lesdites huitième et neuvième liaisons pivot présentent un axe de liaison ajusté et au moins une desdites dixième et onzième liaisons pivot présente un jeu.

L'invention propose également un aéronef comportant un système de propulsion et un ensemble tel que décrit précédemment, où le système de propulsion est fixé au mât réacteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention ;
[Fig. 2] est une vue en perspective d'un ensemble selon un mode de réalisation de l'invention ; et
[Fig. 3] est une vue de derrière illustrant partiellement l'ensemble de la Fig. 2.

### EXPOSÉ DÉTAILLÉ D'UN MODE DE RÉALISATION

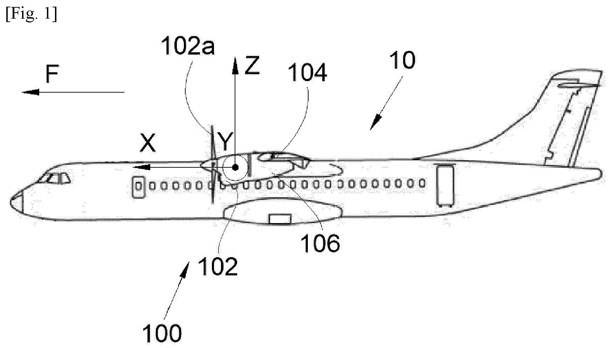

La Fig. 1 montre un aéronef 10 qui comporte un système de propulsion 102, par exemple du type turboréacteur ou turbopropulseur. Le système de propulsion 102 est lié à une aile 104 de l'aéronef 10 par l'intermédiaire d'un mât réacteur 106. L'aile 104 et le mât réacteur 106 forment un ensemble 100 selon l'invention et le système de propulsion 102 est fixé au mât réacteur 106 par tous moyens de fixation appropriés et connus de l'homme du métier tels que ceux divulgués dans le document US-A-2016/0221682.

Dans la description qui suit, les termes relatifs à une position sont pris en référence à un aéronef en position normale de vol, c'est-à-dire comme il est représenté sur la Fig. 1 et les positions « avant » et « arrière » sont prises par rapport à l'avant et l'arrière du système de propulsion 102 et par rapport à la direction d'avancement F de l'aéronef 10 lorsque le système de propulsion 102 fonctionne.

Dans la description qui suit, et par convention, on appelle X la direction longitudinale du système de propulsion qui est horizontale lorsque l'aéronef est au sol, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

Le mât réacteur 106 et le système de propulsion 102 présentent un plan médian vertical XZ et le système de propulsion 102 est ici un turbopropulseur avec une hélice 102a, mais il pourrait être du type turboréacteur à double flux avec une nacelle.

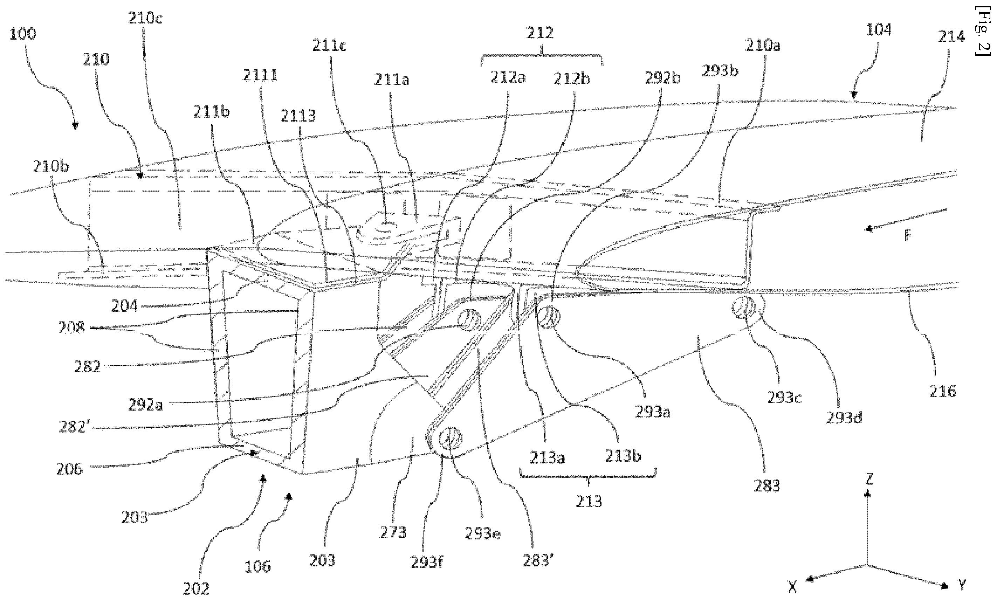

La Fig. 2 montre l'ensemble 100 selon l'invention. Le mât réacteur 106 comprend une structure rigide formant un caisson et également appelée structure primaire 202. La structure primaire 202, illustrée ici en coupe selon un plan parallèle au plan ZY, est classiquement formée d'un longeron supérieur 204, d'un longeron inférieur 206 et de deux panneaux latéraux tribord et bâbord reliant les deux longerons 204 et 206.

La forme de la structure primaire 202 est dans cet exemple configurée pour que le mât réacteur 106 présente une partie arrière 203 sensiblement rectangulaire, située à l'extrémité arrière du mât réacteur 106 selon la direction d'avancement F.

La structure de l'aile 104 comporte un longeron avant 210, un panneau d'extrados 214 et un panneau d'intrados 216 qui sont tous les deux fixés au longeron avant 210 et s'étendent globalement dans des plans horizontaux XY. Bien sûr, pour assurer la rigidité de l'aile, sa structure comporte d'autres éléments (non illustrés) tels que des nervures qui sont réparties entre le panneau d'extrados 214 et le panneau d'intrados 216.

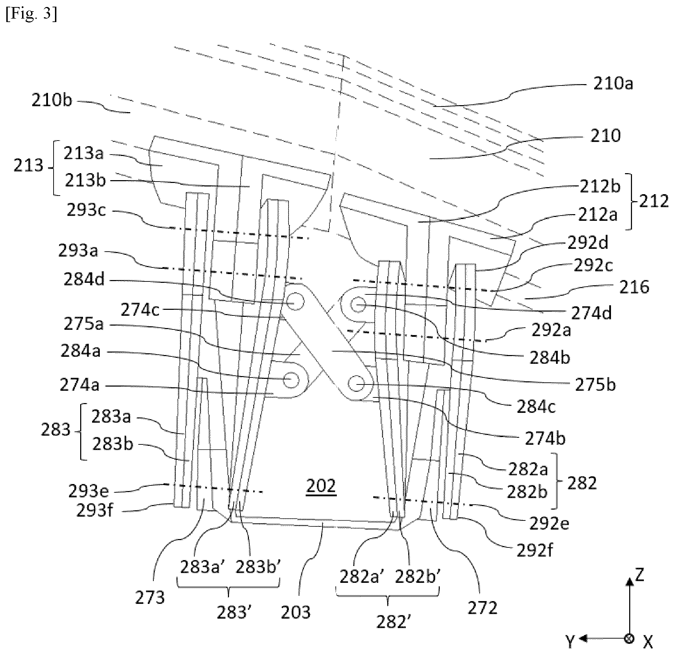

Le longeron avant 210 prend ici la forme d'un profilé en forme d'une marche en Z inversé sur les Figs. 2 et 3, avec une aile supérieure 210a (également appelée partie haute) et une aile inférieure 210b (également appelée partie basse) qui sont globalement horizontales et une partie centrale 210c globalement perpendiculaire au plan médian et s'étendant globalement verticalement parallèlement au plan YZ. Le panneau d'extrados 214 est fixé au-dessus de l'aile supérieure 210a du longeron 210 et le panneau d'intrados 216 est fixé au-dessous de l'aile inférieure 210b du longeron 210. La fixation du longeron avant 210 aux panneaux 214 et 216 est réalisée par tous moyens appropriés comme des soudures, des boulons, etc. Le panneau d'extrados 214 est ainsi fixé en partie haute du longeron avant 210 et le panneau d'intrados 216 est fixé en partie basse du longeron avant 210. La partie centrale 210c est au niveau du bord d'attaque de l'aile 104.

De sorte à permettre la fixation du mât réacteur 106 à l'aile 104, le longeron avant 210 porte une première ferrure 211a, dite ferrure centrale, fixée au niveau du plan médian vertical XZ et plus particulièrement ici à la partie centrale 210c du longeron avant 210. Le panneau d'intrados 216 porte une ferrure tribord 212 et une ferrure bâbord 213 qui sont fixées sur la face externe du panneau d'intrados 216. Dans cet exemple, les ferrures tribord 212 et bâbord 213 sont fixées au niveau, c'est-à-dire globalement dans l'alignement vertical, de la partie basse 210b du longeron avant 210.

L'ensemble 100 comporte une première manille tribord 282 fixée à la ferrure tribord 212 par une première 292a et une deuxième 292c liaisons pivot dont l'axe de rotation est globalement horizontal. Plus précisément, les axes des liaisons 292a et 292c s'étendent globalement perpendiculairement au plan médian XZ.

L'ensemble comporte aussi une première manille bâbord 283 fixée à la ferrure bâbord 213 par une quatrième 293a et une cinquième 293c liaisons pivot autour d'un axe dont l'axe de rotation est globalement horizontal. Plus précisément, les axes des liaisons 293a et 293c s'étendent globalement perpendiculairement au plan médian (XZ).

De sorte à permettre la fixation du mât réacteur 106 à l'aile 104, la partie arrière 203 de la structure primaire 202 comporte une première chape de fixation 211b qui s'étend à l'arrière et au niveau du plan médian vertical XZ. Plus précisément, la première chape de fixation 211b s'étend en haut de la partie arrière 203 et se trouve en vis-à-vis de la première ferrure 211a. La première chape de fixation 211b est fixée à la première ferrure 211a par une septième liaison 211c présentant au moins un degré de liberté en rotation autour d'un axe vertical s'étendant parallèlement à l'axe vertical Z. La septième liaison 211c peut se présenter sous la forme d'une liaison pivot ou d'une liaison pivot-glissant. Dans le mode de réalisation de l'invention présenté ici, la première ferrure 211a prend la forme d'une chape femelle et la première chape de fixation 211b prend la forme d'une chape mâle insérée dans la chape femelle.

Ce point de fixation entre le mât réacteur 106 et l'aile 104 permet de reprendre les efforts axiaux selon l'axe X et les efforts latéraux selon l'axe Y. Ce point de fixation permet également de reprendre le moment autour de l'axe Y.

La partie arrière 203 comporte aussi une chape de fixation tribord 272 et une chape de fixation bâbord 273 qui s'étendent à l'arrière de la partie arrière 203. Plus particulièrement ici, les chapes de fixation tribord 272 et bâbord 273 s'étendent en partie basse et de part et d'autre de ladite partie arrière 203.

La chape de fixation tribord 272 est fixée par une troisième liaison pivot 292e à la manille tribord 282 autour d'un axe globalement horizontal et la chape de fixation bâbord 273 est fixée par une sixième liaison pivot 293e à la manille bâbord 283 autour d'un axe horizontal. Plus précisément, les axes des troisième et sixième liaisons pivot 292e et 293e s'étendent globalement perpendiculairement au plan médian XZ, c'est-à-dire globalement parallèlement à l'axe transversal Y. Les axes des liaisons 292e et 293e peuvent en outre s'étendre globalement coaxialement.

Ainsi, les deux points de fixation des chapes de fixation tribord 272 et bâbord 273 situées de part et d'autre du longeron inférieur 206 de la structure primaire 202 sont reliés aux ferrures tribord 212 et bâbord 213 solidaires de l'aile 104 par deux premières manilles tribord 282 et bâbord 283 présentant trois points de fixation (à savoir les liaisons pivot associées décrites précédemment). De cette manière, la transmission des efforts provenant du système de propulsion 102 et transitant à travers le mât réacteur 106 vers l'aile 104 est optimisée. Plus précisément, ces différents points de fixation du mât réacteur 106 à l'aile 104 permettent d'assurer le transfert des efforts verticaux (selon l'axe Z) et axiaux (selon l'axe X). Ces points de fixation permettent également de reprendre les moments autour des axes X et Z. Cette mise en œuvre particulière permet également de déterminer de manière précise les chemins empruntés par les efforts à travers le mât réacteur 106 jusqu'à l'aile 104.

Dans cet exemple, les premières manilles tribord 282 et bâbord 283, les chapes tribord 282 et bâbord 283 et les ferrures tribord 212 et bâbord 213 comportent chacune un alésage dans lequel est enfilé un axe de sorte à former les liaisons pivot 292a, 292c, 292e et 293a, 293c, 293e.

Dans cet exemple, la première manille tribord 282 et la première manille bâbord 283 présentent une forme globalement triangulaire. Ainsi, les première 292a et deuxième 292c liaisons pivot sont disposées respectivement dans un premier 292b et un deuxième 292d coins haut de la première manille tribord et la troisième liaison pivot 292e est disposée dans un troisième coin 292f bas de la première manille tribord 282. De la même manière, les quatrième 293a et cinquième 293c liaisons pivot sont disposées respectivement dans un quatrième 293b et un cinquième 293d coins haut de la première manille bâbord 213 et la sixième liaison pivot 293e est disposée dans un sixième coin 293f bas de la première manille bâbord 283.

La mise en œuvre de manilles triangulaires permet notamment de rendre l'ensemble 100 compatible avec l'utilisation d'un carénage de forme aérodynamique recouvrant au moins en partie le mât réacteur 106.

Selon ce mode de réalisation de l'invention, l'ensemble 100 comporte une deuxième manille tribord 282' qui s'étend globalement parallèlement à la première manille tribord 282 et qui est fixée à la ferrure tribord 212 par les première 292a et deuxième 292c liaisons et à la chape de fixation tribord par la troisième liaison 292e. De la même manière, l'ensemble 100 comporte une deuxième manille bâbord 283' qui s'étend globalement parallèlement à la première manille bâbord 283 et qui est fixée à la ferrure bâbord 213 par les quatrième 293a et cinquième 293c liaisons et à la chape de fixation bâbord 273 par ladite sixième liaison 293e. De plus, les première 282 et deuxième 282' manilles tribord enserrent la ferrure tribord 212 et la chape de fixation tribord 272 tandis que les première 283 et deuxième 283' manilles bâbord enserrent la ferrure bâbord 213 et la chape de fixation bâbord 273.

Ainsi, chaque ferrure tribord 212 et bâbord 213 est reliée respectivement à la chape de fixation tribord 272 et à la chape de fixation bâbord 273 par deux manilles, respectivement 282, 282' et 283, 283'.

Le doublage des manilles tribord et bâbord permet de multiplier les chemins empruntés par les efforts transitant du système de propulsion 102 vers l'aile 104. Cela permet également d'assurer une continuité des transferts d'efforts en cas de rupture d'une des manilles ou d'un point de fixation de ces manilles au niveau du mât réacteur 106 ou de l'aile 104.

Dans cet exemple, les première et deuxième manilles tribord 282 et 282' sont globalement identiques. Il en est de même pour les première et deuxième manilles bâbord 283 et 283'. Il est toutefois envisageable de prévoir des formes différentes pour les première et deuxième manilles.

Selon ce mode de réalisation, chaque manille 282, 282', 283, 283' comporte deux plaques 282a, 282a', 282b, 282b', 283a, 283a', 283b, 283b'accolées et fixées l'une contre l'autre. Plus particulièrement, la première manille tribord 282 comporte deux plaques 282a et 282b, la deuxième manille tribord 282' comporte deux plaques 282a' et 282b', la première manille bâbord 283 comporte deux plaques 283a et 283b et la deuxième manille bâbord 283' comporte deux plaques 283a' et 283b'. De préférence, les plaques de chaque manille sont identiques.

La mise en œuvre de deux plaques accolées et fixées l'une à l'autre pour former chaque manille permet de multiplier les chemins empruntés par les efforts transitant du système de propulsion 102 vers l'aile 104 et d'assurer une continuité des transferts d'efforts en cas de rupture d'une des plaques de chaque manille ou d'un point de fixation de ces plaques.

Selon ce mode de réalisation, les ferrures tribord 212 et bâbord 213 présentent une section globalement en T avec une partie horizontale fixée à la partie basse 210b du longeron avant 210 et une partie verticale dans laquelle sont réalisées les liaisons pivot associées. Plus précisément, la partie verticale de la ferrure tribord 212 comporte deux alésages dans lesquels sont enfilés des axes pour respectivement former la première 292a et la deuxième 292b liaisons.

De la même manière, la partie verticale de la ferrure bâbord 213 comporte deux alésages dans lesquels sont enfilés des axes pour respectivement former la quatrième 293a et la cinquième 293b liaisons.

Préférentiellement, chaque ferrure tribord 212 et bâbord 213 est constituée de deux éléments, respectivement 212a, 212b et 213a, 213b, présentant une section globalement en Γ. Les deux éléments de chaque ferrure sont solidaires l'un de l'autre. Plus précisément, la solidarisation des deux éléments de chaque ferrure se fait par les parties verticales du Γ qui forment ensemble la partie verticale du T de la ferrure, tandis que les parties horizontales de ces éléments en Γ sont disposées à l'opposé l'une de l'autre et forment ensemble la partie horizontale du T de la ferrure.

La mise en œuvre de deux éléments fixés l'un à l'autre pour former chaque ferrure permet de multiplier les chemins empruntés par les efforts transitant du système de propulsion 102 vers l'aile 104 et d'assurer une continuité des transferts d'efforts en cas de rupture d'un des éléments de chaque ferrure.

Selon ce mode de réalisation, la première chape de fixation 211b comporte deux sous-chapes 2111 et 2113 accolées et fixées l'une contre l'autre. Dans cet exemple, les deux sous-chapes 2111 et 2113 sont identiques. La mise en œuvre de deux sous-chapes 2111 et 2113 fixées l'une à l'autre pour former la première chape de fixation 221b permet de multiplier les chemins empruntés par les efforts transitant du système de propulsion 102 vers l'aile 104et d'assurer une continuité des transferts d'efforts en cas de rupture d'une des sous-chapes de la première chape de fixation 211b.

Selon ce mode de réalisation, la septième liaison 211c entre la première chape de fixation 211b et la première ferrure 211a comporte un axe principal (non illustré) et un axe secondaire (non illustré) s'étendant coaxialement et à l'intérieur de l'axe principal. Dans cet exemple, l'axe principal et l'axe secondaire s'étendent parallèlement à l'axe vertical Z.

Plus précisément, la première ferrure 211a et la première chape de fixation 211b comportent chacune un alésage dans lequel est enfilé l'axe principal pour former la septième liaison pivot 211c. L'axe secondaire est enfilé dans l'axe principal de sorte à assurer une continuité des transferts d'efforts en cas de rupture de l'axe principal.

Comme illustré sur la Fig. 3, qui représente partiellement l'ensemble selon une vue de derrière, l'ensemble 100 comporte en outre un jeu de deux biellettes 275a, 275b permettant de réagir aux efforts provenant du système de propulsion 102 et qui pourraient générer un mouvement oscillatoire sur le mât réacteur 106. Dans cet exemple la partie arrière 203 de la structure primaire 202 comporte une première excroissance bâbord 274a et une première excroissance tribord 274b. Dans cet exemple, chaque première excroissance 274a, 274b présente une forme d'oreille et s'étend verticalement et perpendiculairement aux parois latérales 208 de la structure primaire 202, c'est-à-dire dans un plan perpendiculaire au plan médian vertical XZ. Plus précisément, les premières excroissances 274a et 274b s'étendent ici globalement à la moitié de la hauteur de leur paroi latérale 208 respective.

Les ferrures bâbord 213 et tribord 212 portent respectivement une deuxième excroissance bâbord 274c et une deuxième excroissance tribord 274d. Dans cet exemple, chaque deuxième excroissance 274c, 274d présente également une forme d'oreille et s'étend verticalement dans un plan perpendiculaire au plan médian vertical XZ. Dans cet exemple, les deuxièmes excroissances 274c, 274d s'étendent sur la partie verticale du T de chaque ferrure.

Dans cet exemple, les premières excroissances 274a et 274b se font face. De la même manière, les deuxièmes excroissances 274c et 274d se font également face. Le jeu de biellettes 275a, 275b relie de manière croisée, les ferrures 212 et 213 à la partie arrière 203 de la structure primaire 202. Plus précisément, une première biellette 275a relie la première excroissance bâbord 274a à la deuxième excroissance tribord 274d tandis que la deuxième biellette 275b relie la première excroissance tribord 274b à la deuxième excroissance bâbord 274c. Les première 275a et deuxième 275b biellettes sont donc croisées et s'étendent sensiblement dans deux plans parallèles perpendiculaires au plan médian vertical XZ. Les deux plans parallèles sont légèrement espacés pour favoriser le croisement des première 275a et deuxième 275b biellettes.

Les extrémités de la première biellette 275a sont solidarisées à la première excroissance bâbord 274a et à la deuxième excroissance tribord 274d respectivement par une huitième 284a et une neuvième 284b liaisons pivot. Les extrémités de la deuxième biellette 275b sont solidarisées à la première excroissance tribord 274b et à la deuxième excroissance bâbord 274c respectivement par une dixième 284c et une onzième 284d liaisons pivot. Optionnellement, la première biellette 275a est dite « engagée » tandis que la deuxième biellette 275b est dite « en attente ». Cela signifie que les axes de liaison des huitième 284a et neuvième 284b liaisons pivot sont ajustés et réagissent donc aux efforts sous sollicitation, de sorte que la première biellette 275a représente le chemin d'effort dit « principal » pour la transmission des efforts ayant une composante sensiblement orientée selon la direction transversale Y. Au moins l'une des dixième 284c et onzième 284d liaisons pivot présente un jeu qui permet en cas de rupture de la première biellette 275a, d'engager la deuxième biellette 275b de sorte que ce soit la deuxième biellette 275b qui réagisse aux efforts.

La deuxième biellette 275b représente ainsi le chemin d'effort dit « secondaire ». Par exemple, les douzième 284c et treizième 284d liaisons pivot présentent chacune un axe de liaison porté respectivement par la première excroissance tribord 274b et par la deuxième excroissance bâbord 274c. Au moins un des alésages ménagés aux extrémités de la deuxième biellette 275b et coopérant avec ces axes de liaison présente, par exemple, une forme oblongue de sorte que la deuxième biellette 275b soit montée avec un jeu au niveau d'au moins une des dixième 284c et onzième 284d liaisons pivot.

## Revendications

1. Ensemble (100) pour le montage sur un aéronef (10) d'un système de propulsion (102) présentant un plan médian vertical (XZ), ledit ensemble (100) comportant :
- une aile (104) avec un longeron avant (210) et un panneau d'intrados (216) fixé à une partie basse (210b) dudit longeron avant (210), où le longeron avant (210) porte une première ferrure (211a) et où ledit panneau d'intrados (216) porte une ferrure tribord (212) et une ferrure bâbord (213),
- un mât réacteur (106) comportant une structure primaire (202),
- une première manille tribord (282) fixée à ladite ferrure tribord (212),
- une première manille bâbord (283) fixée à ladite ferrure bâbord (213),
une partie arrière (203) de ladite structure primaire (202) comportant une première chape de fixation (211b) s'étendant à l'arrière et au niveau du plan médian vertical (XZ), ladite première chape de fixation (211b) étant fixée à ladite première ferrure (211a) par une septième liaison (211c) présentant au moins un degré de liberté en rotation autour d'un axe vertical,
ladite partie arrière (203) comportant aussi une chape de fixation tribord (272) et une chape de fixation bâbord (273) s'étendant de part et d'autre et à l'arrière de ladite partie arrière (203), où ladite chape de fixation tribord (272) est fixée par une troisième liaison pivot (292e) à ladite première manille tribord (282) autour d'un axe s'étendant globalement perpendiculairement au plan médian (XZ) et où ladite chape de fixation bâbord (273) est fixée par une sixième liaison pivot (293e) à ladite première manille bâbord (283) autour d'un axe s'étendant globalement perpendiculairement au plan médian (XZ),
**caractérisé en ce que** ladite première ferrure (211a) est disposée au niveau du plan médian vertical (XZ),
**en ce que** ladite première manille tribord (282) est fixée à ladite ferrure tribord (212) par une première (292a) et une deuxième (292c) liaisons pivot autour d'un axe s'étendant globalement perpendiculairement au plan médian (XZ),
et **en ce que** ladite première manille bâbord (283) est fixée à ladite ferrure bâbord (213) par une quatrième (293a) et une cinquième (293c) liaisons pivot autour d'un axe s'étendant globalement perpendiculairement au plan médian (XZ).

2. Ensemble (100) selon la revendication 1, **caractérisé en ce qu'**il comporte en outre :
- une deuxième manille tribord (282') s'étendant globalement parallèlement à ladite première manille tribord (282), ladite deuxième manille tribord (282') étant fixée à ladite ferrure tribord (212) par lesdites première (292a) et deuxième (292c) liaisons et à ladite chape de fixation tribord (272) par ladite troisième liaison (292e),
- une deuxième manille bâbord (283') s'étendant globalement parallèlement à ladite première manille bâbord (283), ladite deuxième manille bâbord (283') étant fixée à ladite ferrure bâbord (213) par lesdites quatrième (293a) et cinquième (293c) liaisons et à ladite chape de fixation bâbord (273) par ladite sixième liaison (293e),
où lesdites première (282) et deuxième (282') manilles tribord enserrent ladite ferrure tribord (212) et ladite chape de fixation tribord (272) et où lesdites première (283) et deuxième (283') manilles bâbord enserrent ladite ferrure bâbord (213) et ladite chape de fixation bâbord (273).

3. Ensemble (100) selon la revendication 2, **caractérisé en ce que** chaque manille (282, 282', 283, 283') comporte deux plaques (282a, 282a', 282b, 282b', 283a, 283a', 283b, 283b') accolées et fixées l'une contre l'autre.

4. Ensemble (100) selon l'une quelconque des revendications 1 à 3, **caractérisé en ce que** lesdites ferrures tribord (212) et bâbord (213) présentent une section globalement en T avec une partie horizontale fixée à la partie basse (210b) dudit longeron avant (210) et une partie verticale dans laquelle sont réalisées les liaisons pivot associées.

5. Ensemble (100) selon la revendication 4, **caractérisé en ce que** chaque ferrure tribord (212) et bâbord (213) est constituée de deux éléments (212a, 212b et 213a, 213b) présentant une section globalement en Γ et étant solidaires l'un de l'autre.

6. Ensemble (100) selon l'une quelconque des revendications 1 à 5, **caractérisé en ce que** ladite première chape de fixation (211b) comporte deux sous-chapes (2111, 2113) accolées et fixées l'une contre l'autre.

7. Ensemble (100) selon l'une quelconque des revendications 1 à 6, **caractérisé en ce que** la septième liaison (211c) entre ladite première chape de fixation (211b) et ladite première ferrure (211a) comporte un axe principal et un axe secondaire s'étendant coaxialement et à l'intérieur dudit axe principal.

8. Ensemble (100) selon l'une quelconque des revendications 1 à 6, **caractérisé en ce que** ladite partie arrière (203) comporte une première excroissance bâbord (274a) et une première excroissance tribord (274b) s'étendant verticalement dans un plan globalement perpendiculaire au plan médian vertical (XZ), lesdites premières excroissances (274a, 274b) étant disposées de part et d'autre de ladite structure primaire (202),
pour la première excroissance bâbord (274a), l'ensemble (100) comporte une première biellette (275a) dont une première extrémité est fixée à ladite première excroissance (274a) par une huitième liaison pivot (284a),
pour la première excroissance tribord (274b), l'ensemble (100) comporte une deuxième biellette (275b) dont une première extrémité est fixée à ladite première excroissance tribord (274b) par une neuvième liaison pivot (284b),
et **en ce que** lesdites ferrures bâbord (213) et tribord (213) comportent respectivement une deuxième excroissance bâbord (274c) et une deuxième excroissance tribord (274d) s'étendant verticalement dans un plan globalement perpendiculaire au plan médian vertical (XZ), lesdites deuxièmes excroissances (274c, 274d) s'étendant en partie basse des ferrures (212, 213), la deuxième excroissance tribord (274d) étant fixée à une deuxième extrémité de ladite première biellette (275a) par une dixième liaison pivot (284b) et ladite deuxième excroissance bâbord (274c) étant fixée à une deuxième extrémité de ladite deuxième biellette (275b) par une onzième liaison pivot (284b).

9. Ensemble (100) selon la revendication 7, **caractérisé en ce que** lesdites huitième (284a) et neuvième (284b) liaisons pivot présentent un axe de liaison ajusté et **en ce qu'**au moins une desdites dixième (284c) et onzième (284d) liaisons pivot présente un jeu.

10. Aéronef (10) comportant un système de propulsion (102) et un ensemble (100) selon l'une quelconque des revendications 1 à 9, où le système de propulsion (102) est fixé au mât réacteur (106).

## Patentansprüche

1. Anordnung (100) zur Montage, an einem Flugzeug (10), eines Antriebssystems (102), das eine vertikale Mittelebene (XZ) aufweist, wobei die Anordnung (100) Folgendes umfasst:
- eine Tragfläche (104) mit einem Vorderholm (210) und einer Unterseitenplatte (216), die an einem unteren Teil (210b) des Vorderholms (210) befestigt ist, wobei der Vorderholm (210) einen ersten Beschlag (211a) trägt und wobei die Unterseitenplatte (216) einen steuerbordseitigen Beschlag (212) und einen backbordseitigen Beschlag (213) trägt,
- einen Triebwerkspylon (106), der eine Primärstruktur (202) umfasst,
- einen ersten steuerborseitigen Bügel (282), der an dem steuerbordseitigen Beschlag (212) befestigt ist,
- einen ersten backborseitigen Bügel (283), der an dem backbordseitigen Beschlag (213) befestigt ist,
wobei ein hinterer Teil (203) der Primärstruktur (202) einen ersten Befestigungsgabelkopf (211b) umfasst, der sich hinten und auf der Höhe der vertikalen Mittelebene (XZ) erstreckt, wobei der erste Befestigungsgabelkopf (211b) an dem ersten Beschlag (211a) durch eine siebte Verbindung (211c) befestigt ist, die mindestens einen Rotationsfreiheitsgrad um eine vertikale Achse aufweist, wobei der hintere Teil (203) auch einen steuerbordseitigen Befestigungsgabelkopf (272) und einen backbordseitigen Befestigungsgabelkopf (273) umfasst, die sich zu beiden Seiten und hinter dem hinteren Teil (203) erstrecken, wobei der steuerbordseitige Befestigungsgabelkopf (272) durch eine dritte Schwenkverbindung (292e) an dem ersten steuerbordseitigen Bügel (282) um eine Achse befestigt ist, die sich im Wesentlichen senkrecht zu der Mittelebene (XZ) erstreckt, und wobei der backbordseitige Befestigungsgabelkopf (273) durch eine sechste Schwenkverbindung (293e) an dem ersten backbordseitigen Bügel (283) um eine Achse befestigt ist, die sich im Wesentlichen senkrecht zu der Mittelebene (XZ) erstreckt, **dadurch gekennzeichnet, dass** der erste Beschlag (211a) auf Höhe der vertikalen Mittelebene (XZ) angeordnet ist, dass der erste steuerbordseitige Bügel (282) an dem steuerbordseitigen Beschlag (212) durch eine erste (292a) und eine zweite (292c) Schwenkverbindung um eine Achse befestigt ist, die sich im Wesentlichen senkrecht zu der Mittelebene (XZ) erstreckt,
und dass der erste backbordseitige Bügel (283) an dem backbordseitigen Beschlag (213) durch eine vierte (293a) und eine fünfte (293c) Schwenkverbindung um eine Achse befestigt ist, die sich im Wesentlichen senkrecht zu der Mittelebene (XZ) erstreckt.

2. Anordnung (100) nach Anspruch 1, **dadurch gekennzeichnet, dass** sie ferner Folgendes umfasst:
- einen zweiten steuerbordseitigen Bügel (282'), der sich im Wesentlichen parallel zu dem ersten steuerbordseitigen Bügel (282) erstreckt, wobei der zweite steuerbordseitige Bügel (282')an dem steuerbordseitigen Beschlag (212) durch die erste (292a) und die zweite (292c) Verbindung und an dem steuerbordseitigen Befestigungsgabelkopf (272) durch die dritte Verbindung (292e) befestigt ist,
- einen zweiten backbordseitigen Bügel (283'), der sich im Wesentlichen parallel zu dem ersten backbordseitigen Bügel (283) erstreckt, wobei der zweite backbordseitige Bügel (283') an dem backbordseitigen Beschlag (213) durch die vierte (293a) und die fünfte (293c) Verbindung und an dem backbordseitigen Befestigungsgabelkopf (273) durch die sechste Verbindung (293e) befestigt ist,
wobei der erste (282) und der zweite (282') steuerbordseitige Bügel den steuerbordseitigen Beschlag (212) und den steuerbordseitigen Befestigungsgabelkopf (272) einspannen und wobei der erste (283) und der zweite (283') backbordseitige Bügel den backbordseitigen Beschlag (213) und den backbordseitigen Befestigungsgabelkopf (273) einspannen.

3. Anordnung (100) nach Anspruch 2, **dadurch gekennzeichnet, dass** jeder Bügel (282, 282', 283, 283') zwei Platten (282a, 282a', 282b, 282b', 283a, 283a', 283b, 283b') umfasst, die aneinander gesetzt und befestigt sind.

4. Anordnung (100) nach einem der Ansprüche 1 bis 3, **dadurch gekennzeichnet, dass** der steuerbordseitige (212) und der backbordseitige (213) Beschlag einen im Wesentlichen T-förmigen Querschnitt aufweisen mit einem horizontalen Teil, der an dem unteren Teil (210b) des Vorderholms (210) befestigt ist, und einem vertikalen Teil, in dem die zugehörigen Schwenkverbindungen ausgeführt sind.

5. Anordnung (100) nach Anspruch 4, **dadurch gekennzeichnet, dass** jeder steuerbordseitige (212) und backbordseitige (213) Beschlag aus zwei Elementen (212a, 212b und 213a, 213b) besteht, die einen im Wesentlichen T-förmigen Querschnitt aufweisen und fest miteinander verbunden sind.

6. Anordnung (100) nach einem der Ansprüche 1 bis 5, **dadurch gekennzeichnet, dass** der erste Befestigungsgabelkopf (211b) zwei Teilgabelköpfe (2111, 2113) umfasst, die aneinander gesetzt und befestigt sind.

7. Anordnung (100) nach einem der Ansprüche 1 bis 6, **dadurch gekennzeichnet, dass** die siebte Verbindung (211c) zwischen dem ersten Befestigungsgabelkopf (211b) und dem ersten Beschlag (211a) eine Hauptachse und eine Nebenachse, die sich koaxial und innerhalb der Hauptachse erstreckt, umfasst.

8. Anordnung (100) nach einem der Ansprüche 1 bis 6, **dadurch gekennzeichnet, dass** der hintere Teil (203) einen ersten backbordseitigen Vorsprung (274a) und einen ersten steuerbordseitigen Vorsprung (274b) umfasst, die sich in einer zu der vertikalen Mittelebene (XZ) im Wesentlichen senkrechten Ebene vertikal erstrecken, wobei die ersten Vorsprünge (274a, 274b) zu beiden Seiten der Primärstruktur (202) angeordnet sind,
wobei die Anordnung (100) für den ersten backbordseitigen Vorsprung (274a) eine erste Stange (275a) umfasst, von der ein erstes Ende durch eine achte Schwenkverbindung (284a) an dem ersten Vorsprung (274a) befestigt ist, wobei die Anordnung (100) für den ersten steuerbordseitigen Vorsprung (274b) eine zweite Stange (275b) umfasst, von der ein erstes Ende durch eine neunte Schwenkverbindung (284b) an dem ersten steuerbordseitigen Vorsprung (274b) befestigt ist,
und dass die backbordseitigen (213) und steuerbordseitigen (213) Beschläge einen zweiten backbordseitigen Vorsprung (274c) bzw. einen zweiten steuerbordseitigen Vorsprung (274d) umfassen, die sich in einer zu der vertikalen Mittelebene (XZ) im Wesentlichen senkrechten Ebene vertikal erstrecken, wobei sich die zweiten Vorsprünge (274c, 274d) im unteren Teil der Beschläge (212, 213) erstrecken, wobei der zweite steuerbordseitige Vorsprung (274d) durch eine zehnte Schwenkverbindung (284b) an einem zweiten Ende der ersten Stange (275a) befestigt ist und der zweite backbordseitige Vorsprung (274c) durch eine elfte Schwenkverbindung (284b) an einem zweiten Ende der zweiten Stange (275b) befestigt ist.

9. Anordnung (100) nach Anspruch 7, **dadurch gekennzeichnet, dass** die achte (284a) und die neunte (284b) Schwenkverbindung eine justierte Verbindungsachse aufweisen und dass mindestens eine der zehnten (284c) und der elften (284d) Schwenkverbindung ein Spiel aufweist.

10. Flugzeug (10), das ein Antriebssystem (102) und eine Anordnung (100) nach einem der Ansprüche 1 bis 9 umfasst, wobei das Antriebssystem (102) an dem Triebwerkspylon (106) befestigt ist.

## Claims

1. Assembly (100) for mounting on an aircraft (10) a propulsion system (102) having a vertical median plane (XZ), said assembly (100) comprising:
- a wing (104) with a front longeron (210) and an intrados panel (216) fixed to a lower section (210b) of said front longeron (210), in which the front longeron (210) carries a first fitting (211a) and in which said intrados panel (216) carries a starboard fitting (212) and a port fitting (213),
- a reactor mast (106) comprising a primary structure (202),
- a first starboard shackle (282) fixed to said starboard fitting (212),
- a first port shackle (283) fixed to said port fitting (213),
a rear part (203) of said primary structure (202) comprising a first fixing lug (211b) extending rearwardly and at the vertical median plane (XZ) level, said first fixing lug (211b) being fixed to said first fitting (211a) by a seventh connection (211c) having at least one degree of freedom in rotation about a vertical axis,
said rear part (203) also comprising a starboard fixing lug (272) and a port fixing lug (273) extending on either side and to the rear of said rear part (203),
wherein said starboard fixing lug (272) is fixed by a third pivot connection (292e) to said first starboard shackle (282) about an axis extending generally perpendicularly to the median plane (XZ) and wherein said port fixing lug (273) is fixed by a sixth pivot connection (293e) to said first port shackle (283) about an axis extending generally perpendicularly to the median plane (XZ)
**characterized in that** said first fitting (211a) is disposed at the vertical median plane level (XZ),
**in that** said first starboard shackle (282) fixed to said starboard fitting (212) by a first pivot connection (292a) and a second pivot connection (292c) about an axis extending generally perpendicularly to the median plane (XZ),
and **in that** said first port shackle (283) fixed to said port fitting (213) by a fourth pivot connection (293a) and a fifth pivot connection (293c) about an axis extending generally perpendicularly to the median plane (XZ).

2. Assembly (100) according to claim 1, **characterized in that** it further comprises:
- a second starboard shackle (282') extending generally parallel to said first starboard shackle (282), said second starboard shackle (282') being fixed to said starboard fitting (212) by said first connection (292a) and second connection (292c) and to said starboard fixing lug (272) by said third connection (292e),
- a second port shackle (283') extending generally parallel to said first port shackle (283), said second port shackle (283') being fixed to said port fitting (213) by said fourth connection (293a) and fifth connection (293c) and to said port fixing lug (273) by said sixth connection (293e),
wherein said first starboard shackle (282) and second starboard shackle (282') enclose said starboard fitting (212) and said starboard fixing lug (272), and wherein said first port shackle (283) and second port shackle (283') enclose said port fitting (213) and said port fixing lug (273).

3. Assembly (100) according to claim 2, **characterized in that** each shackle (282, 282', 283, 283') comprises two plates (282a, 282a', 282b, 282b', 283a, 283a', 283b, 283b') juxtaposed and fixed to one another.

4. Assembly (100) according to any of claims 1 to 3, **characterized in that** said starboard fitting (212) and port fitting (213) have a generally T-shaped section, respectively, with a horizontal part fixed to the lower section (210b) of said front longeron (210) and a vertical section in which the associated pivot connections are made.

5. Assembly (100) according to Claim 4, **characterized in that** each starboard fitting (212) and each port fitting (213) is made up of two elements (212a, 212b and 213a, 213b) having a generally Γ-shaped section, respectively, and being integral with one another.

6. Assembly (100) according to any of claims 1 to 5, **characterized in that** said first fixing lug (211b) comprises two sub-plates (2111, 2113) juxtaposed and fixed against one another.

7. Assembly (100) according to any of claims 1 to 6, **characterized in that** the seventh connection (211c) between said first fixing lug (211b) and said first fitting (211a) comprises a main axis and a secondary axis extending coaxially and within said main axis.

8. Assembly (100) according to any of claims 1 to 6, **characterized in that** said rear section (203) comprises a first port protrusion (274a) and a first starboard protrusion (274b) extending vertically in a plane generally perpendicular to the vertical median plane (XZ), said first protrusions (274a, 274b) being disposed on either side of said primary structure (202), for the first port protrusion (274a), the assembly (100) comprises a first rod (275a), a first end of which is fixed to said first port protrusion (274a) by an eighth pivot connection (284a),
for the first starboard protrusion (274b), the assembly (100) comprises a second rod (275b), a first end of which is fixed to said first starboard protrusion (274b) by a ninth pivot connection (284b),
and **in that** said port fittings (213) and starboard fittings (213) respectively comprise a second port protrusion (274c) and a second starboard protrusion (274d) extending vertically in a plane generally perpendicular to the vertical median plane (XZ), said second protrusions (274c, 274d) extending at the lower section of the fittings (212, 213), the second starboard protrusion (274d) being fixed to a second end of said first rod (275a) by a tenth pivot connection (284b) and said second port protrusion (274c) being fixed to a second end of said second rod (275b) by an eleventh pivot connection (284b).

9. Assembly (100) according to Claim 7, **characterized in that** said eighth pivot connection (284a) and ninth pivot connection (284b) have a fitted connection axis and **in that** at least one of said tenth pivot connection (284c) and eleventh pivot connection (284d) has a clearance.

10. Aircraft (10) comprising a propulsion system (102) and an assembly (100) according to any of claims 1 to 9, wherein the propulsion system (102) is fixed to the reactor mast (106).
